(19) Europäisches Patentamt
European Patent Office
Office européen des brevets

(11) **EP 3 772 171 B1**

(12) **EUROPÄISCHE PATENTSCHRIFT**

(45) Veröffentlichungstag und Bekanntmachung des Hinweises auf die Patenterteilung:
**24.05.2023** **Patentblatt 2023/21**

(21) Anmeldenummer: **20159463.7**

(22) Anmeldetag: **26.02.2020**

(51) Internationale Patentklassifikation (IPC):
*H02P 3/02* (2006.01)    *H02P 6/24* (2006.01)
*H02P 6/16* (2016.01)

(52) Gemeinsame Patentklassifikation (CPC):
**H02P 3/025; H02P 6/16; H02P 6/24;** H02P 2203/03

(54) **EC-MOTOR MIT REDUZIERTEM ENERGIEVERBRAUCH IM STILLSTAND-MODUS**

EC MOTOR WITH REDUCED POWER CONSUMPTION IN STANDSTILL MODE

MOTEUR CE À CONSOMMATION D'ÉNERGIE RÉDUITE EN MODE D'ARRÊT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2019   DE 102019120888**

(43) Veröffentlichungstag der Anmeldung:
**03.02.2021   Patentblatt 2021/05**

(73) Patentinhaber: **ebm-papst Landshut GmbH**
**84030 Landshut (DE)**

(72) Erfinder:
• **GOLDNER, Robert**
**84036 Landshut (DE)**
• **HOLZNER, Markus**
**84164 Moosthenning (DE)**

(74) Vertreter: **Staeger & Sperling**
**Partnerschaftsgesellschaft mbB**
**Sonnenstraße 19**
**80331 München (DE)**

(56) Entgegenhaltungen:
DE-A1- 19 843 123    DE-A1-102015 200 459
JP-A- H07 322 683    US-A1- 2004 178 754

## Beschreibung

Die Erfindung betrifft eine Lösung zur Reduktion des Energieverbrauchs im Stillstand-Modus bei einem EC-Motor. Der Stillstand kann dabei der Zustand im Standby sein.

Seit dem Aufkommen von bürstenlosen EC-Motoren werden Hall-Effekt-Sensoren für das nötige Feedback zur Kommutierung der Motoren verwendet. Für zum Beispiel eine 3-Phasen-Regelung werden drei Sensoren benötigt. Aufgrund der geringen Stückkosten der Hall- Sensoren stellen diese aus Sicht der Kostenkalkulation eine preiswerte Lösung zur Realisierung der Kommutierung dar. Die Hall-Sensoren werden in den Stator des Motors eingebettet und ermitteln die Rotorposition des Rotors des Motors. Diese Position wird verwendet, um die Transistoren in Brückenschaltung gezielt zu schalten und den Motor entsprechend der Schaltfolge anzutreiben. Obschon die Verwendung von Hall-Sensoren eine effiziente Lösung zur Kommutierung von BLDC-Motoren darstellen, bringen diese auch gewisse Nachteile mit sich. Hall-Effekt-Sensoren gestatten es einer Motorsteuerung, einen BLDC-Motor anzutreiben. Leider jedoch sind ihre Regelungs -und Nutzungsmöglichkeiten im Wesentlichen auf die Drehzahl und die Erfassung der Drehrichtung Richtung beschränkt. Es ist derzeit nicht möglich, die Position des Stillstands des Rotors gegenüber dem Stator darüber gezielt zu beeinflussen.

Aus der Druckschrift DE 10 2015 200459 A1 ist eine Vorrichtung zum Kalibrieren einer elektronisch kommutierten elektrischen Maschine, insbesondere einem Elektromotor bekannt. Die Vorrichtung ist ausgebildet, wenigstens den Strom durch den Stator zu erfassen und ein den Strom repräsentierendes Stromsignal zu erzeugen und das Stromsignal mit einem abgespeicherten Datensatz zu vergleichen. Aus der Druckschrift JP H07 322683 A ist ein Verfahren bekannt einen Rotor in eine bestimmte Rotorlage zu bringen.

Bei einem 3-Phasen-Motor können Hall-Effekt-Sensoren zwar die Winkelposition innerhalb der einzelnen elektrischen Zyklen bereitstellen. Mit steigender Anzahl an Polpaaren nimmt auch die Anzahl der elektrischen Zyklen pro mechanischer Umdrehung zu, und da BLDC-Motoren immer häufiger anzutreffen sind, wird einerseits die exakte Positionsermittlung immer wichtiger.

Bei solchen Motoren mit Hall-Schaltern gibt es bei Stillstand meist Rotorlagen, in welchen der Energieverbrauch höher ist als in anderen d. h. für den Stillstand-Energieverbrauch günstigere Lagen.

Für eine energiesparende Lösung sollte das BLDC-System Echtzeit-Positionsdaten auch für den Stillstand bereitstellen, damit die Motorsteuerung nicht nur die Drehzahl und die Drehrichtung im Betreib verfolgen kann, sondern auch die zurückgelegte Strecke und die Winkelposition, um daraus zu ermitteln, ob sich der Rotor in einer energetisch günstigen oder ungünstigen Winkellageposition befindet.

Um genauere Positionsinformationen zu erhalten, wurde als häufigste Lösung auf einen zusätzlichen inkrementalen Drehgeber für den BLDC-Motor gesetzt. Inkrementale Drehgeber werden oft zusätzlich zu Hall-Effekt-Sensoren in denselben Regelkreis integriert. Die Hall-Sensoren werden zur Motor-Kommutierung verwendet und der Drehgeber verfolgt mit sehr viel höherer Genauigkeit Position, Rotation, Drehzahl und Richtung. Da Hall-Sensoren nur bei jeder Statusänderung neue Positionsdaten liefern, ist ihre Genauigkeit pro elektrischer Umdrehung beschränkt.

Ferner wird die Stellung des Hall-Schalters als Drehzahlsignal typischerweise über eine Optokoppler-Schnittstelle ausgegeben. Im laufenden Betrieb wechseln die Zustände sowohl von Hall-Schalter und Schnittstelle (High-Low) sich andauernd ab, was eine gewollte Funktion darstellt. Die verschiedenen Zustände (High-Low) des Hall-Schalters und der Schnittstelle bedingen unterschiedliche Stromverbräuche. Der Stromverbauch der Schnittstelle und des Hall-Schalters sind gegenüber der Motorleistung bei drehenden Motor zu vernachlässigen und nicht von nennenswerter Bedeutung. Bei einem Motorstillstand verursacht dieser so bedingte Energieverbrauch einen nennenswerten Teil der Leistung, somit der Leistung im Stillstand-Betrieb.

Der Erfindung liegt daher die Aufgabe zugrunde, vorbesagte Nachteile zu überwinden und ein optimiertes und verbessertes Verfahren sowie eine entsprechende Lösung für die Beeinflussung der Position von EC-Motoren anzugeben, um den Rotor bei Motorstillstand in eine energetisch günstige Position zu bringen.

Diese Aufgabe wird durch die Merkmalskombination gemäß Anspruch 1 gelöst.

Ein Grundgedanke besteht darin, dass nach dem Abschalten des Motors der Rotor in einer zufälligen Rotorlage stoppt oder eine bestimmte Drehzahl unterschritten hat und dann mittels eines vorbestimmten kurzen Stromimpuls durch eine Bestromung des Motors ein gezieltes Weiterdrehen des Rotors bewirkt wird, dass dieser entweder nach dem Stoppen des Motors von einer energetisch ungünstigen in eine energetisch günstigere Lage gebracht wird oder der Stromimpuls im noch drehenden Zustand des Rotors erfolgt und der Rotor gezielt direkt in einer energetisch günstigere Lage stoppt. Der Stromimpuls bzw. ein vorbestimmter kurzer Stromimpuls ist dadurch charakterisiert, dass dieser variable in seiner Zeitdauer sein kann und in seiner Höhe variieren kann.

Eine energetisch günstige Position im Sinne der vorliegenden Erfindung wird darin gesehen, dass im nicht kommutierten Zustand des Motors (abgeschalteter Motor) die Stromaufnahme in einer solchen Position geringer ist als in einer davon abweichenden Position bei der der Energieverbrauch lagebedingt höher ist. Da der Energieverbrauch vom Energieverbrauch in den entsprechenden Drehwinkelpositionen unmittelbar abhängt, lässt sich der jeweils aktuelle Energieverbrauch über die Stromaufnahme der Motorsteuerung ermitteln.

Funktional lässt sich damit in Umfangsrichtung einer mechanischen Umdrehung des Rotors betrachtet für den Energieverbrauch folgender Zusammenhang definieren:

$$E(\vartheta) = E_{min,\,i} \text{ für } \vartheta = \vartheta_i$$

und

$$E(\vartheta) > E_{min,\,i} \text{ für } \vartheta \neq \vartheta_i$$

wobei 9i diejenigen Winkelpositionen zwischen 0° und 360° des Rotors darstellen bei denen der jeweilige Energieverbrauch $E_{min,\,i}$ relative oder absolute Energieminima auf der Energieverlaufskurve E (3) darstellen. Für Winkelpositionen $\vartheta \neq \vartheta_i$ ist der Energieverbrauch E (d) demzufolge jeweils höher als an den Winkelpositionen di.

Betrachtet man demnach die lokale Ableitungsfunktion dE(d)/ dd, so besitzt diese an den energetisch günstigen Winkelpositionen $\vartheta_i$ jeweils einen Nulldurchgang. Funktional ausgedrückt bedeutet dies nach der Lehre der Erfindung, dass der Motor so bestromt wird, dass eine Winkelposition erreicht wird, bei der die Bedingung gilt:

$$dE(\vartheta)/\, d\vartheta = 0 \text{ für } \vartheta = \vartheta_i$$

Die Bestromung des Motors erfolgt mit Vorteil durch gezieltes Einprägen eines vergleichsweise kleinen Stromimpulses für eine kurze Zeitdauer in die Motorwicklung ohne Kommutierung des Motors. Sollte sich danach, z. B. durch äußere Einflüsse der Rotor wieder aus der optimierten Lage von einer Winkelposition 9i in eine Winkelpositionen $\vartheta \neq \vartheta_i$ wegbewegen, so wird die genannte Prozedur solange wiederholt, bis sich der Rotor ein einer Winkelposition 9i befindet, bei der der Energieverbrauch E (di) = $E_{min,\,i}$ ist, wobei $E_{min,\,i}$ vorzugsweise ein absolutes Energieminimum der Energieverlaufskurve E (d) ist.

Beim Unterschreiten einer Grenzdrehzahl kann in einer vorteilhaften Ausgestaltung der Erfindung demnach die Motorwicklungen (ohne Kommutierung) durch einen bestimmungsgemäßen Stromimpuls I so bestromt werden, dass der Rotor zwangsweise in einer energetisch vorteilhaften Winkellage zum Stillstand kommt.

Es ist weiter in einer bevorzugten Ausführung der Erfindung vorgesehen, dass eine Steuerungseinheit vorgesehen ist, welche aus erfassten Sensordaten des oder der Hall-Sensoren, vorzugsweise aus den sich zeitlich ändernden Sensordaten des oder der Hall-Sensoren mindestens einen Wert und eine Zeitdauer für einen Stromimpuls I ermittelt, der erforderlich ist, um eine ganz bestimmte Drehwinkellage $\vartheta_i$ des Rotors zu erzielen.

Ebenfalls ist es von Vorteil, wenn die oder eine Steuerungseinheit das Erreichen einer bestimmten Energieverbrauchsposition aus dem jeweils aktuellen Energieverbrauch über eine Messung der Stromaufnahme der Motorsteuerung ermittelt. Dies ist insofern von Vorteil, dass man auch im Stillstand des Rotors erfassen kann, ob die durch einen Stromimpuls gezielt erzwungene Stillstandposition eine Drehwinkelposition darstellt, bei der der Energieverbrauch unterhalb eines bestimmten Wertes, vorzugsweise in einem Energieverbrauchsminimum liegt.

Ergänzend kann dazu vorgesehen sein, dass man anhand eines Datensammlers jeweils nach Erreichen der erzwungenen Stillstandposition, denjenigen dafür aktivierten Stromimpuls sukzessive weiter Optimiert, um möglichst den Rotor exakt in eine energetisch optimale Position zu bewegen.

Ergänzend kann auch eine Kombination der beiden geschilderten Methoden erfolgen, nämlich zunächst nach dem Abschalten des Motors die Erzeugung eines ersten Stromimpulses I1 zur Imitierung einer gezielten Endlageposition und sobald der Rotor den Stillstand erreicht hat, ein weiterer ggf. geringerer Stromimpuls um sozusagen eine Nachjustage in die oder eine andere gewünschte Endlagenposition zu erreichen. Dabei kann auch berücksichtigt werden, ob die Stillstandposition in Umfangsrichtung d.h. Drehrichtung betrachtet vor der zu erzielenden Position in einem Energieminimum zu stoppen kam oder ein Stück danach, so dass abhängig davon ein jeweils angepasster Stromimpuls den Rotor in Drehrichtung in die jeweils nachfolgende energetisch optimale Drehwinkelposition bewegt.

In einer ebenfalls vorteilhaften Ausgestaltung der Erfindung ist vorgesehen, dass die Bestromung des Motors durch gezieltes Einprägen eines vergleichsweise kleinen Stromimpulses für eine kurze Zeitdauer in die Motorwicklung ohne Kommutierung des Motors dann wiederholt erfolgt, wenn der Rotor durch äußere Einflüsse nach Erreichen einer energetisch günstigen Winkelposition $\vartheta_i$ wieder aus der optimierten Lage in eine Winkelpositionen $3 \neq \vartheta_i$ wegbewegt wurde.

Ein weiterer Aspekt, der nicht zur Erfindung gehört, betrifft einen EC-Motor mit einer Motorsteuerung zum kommutieren des EC-Motors, wobei der Motor zur Lageerfassung mit wenigstens einem Lage-Sensor, vorzugsweise mehreren Hall-Sensoren ausgebildet ist und die Motorsteuerung ferner dazu ausgebildet ist, nach einer Abschaltbedingung des EC-Motors und nach Beenden der Kommutierung des EC-Motors einen in Zeitdauer und Betrag gezielten Stromimpuls an wenigstens einer Motorwicklung zu erzeugen, um dadurch die Stillstandposition des Rotors zu beeinflussen oder zu verändern.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1 eine Darstellung eines Flussdiagramms einer allgemeinsten Ausführungsform der Erfindung,

Fig. 2 eine Darstellung eines Flussdiagramms einer alternativen Ausführungsform der Erfindung,

| Fig. 3 | eine Darstellung eines Flussdiagramms einer weiteren alternativen Ausführungsform der Erfindung und |
| Fig. 4 | eine schematische Ansicht eines EC-Motors. |

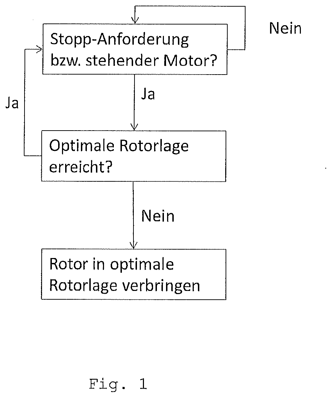

In Figur 1 ist eine Darstellung eines Flussdiagramms einer allgemeinsten Ausführungsform der Erfindung gezeigt, bei der das Verfahren zur gezielten Positionsveränderung der Winkelposition 9 eines Rotors 2 eines aktuell nicht kommutierten EC-Motors 1, dessen Winkelposition 9 mit wenigstens einem Positionsbestimmungssensor 3 ermittelt wird. Zunächst wird ermittelt ob eine Stipp-Anforderung erfolgt ist. Falls ja, wird geprüft, ob eine optimale Ruhelage des Rotors erreicht wurde. Falls nicht, wird mittels eines vorbestimmten kurzen Stromimpulses I dieser in eine Winkelposition 9i zwischen 0° und 360° betreffend einer mechanischen Umdrehung im Stillstand des Rotors 2 gebracht, bei welcher der Energieverbrauch E (3) der Motorsteuerung ein lokales Minimum besitzt. Dies ist dadurch im Flussdiagramm dargestellt, dass der Rotor in eine optimale Rotorposition geführt wurde.

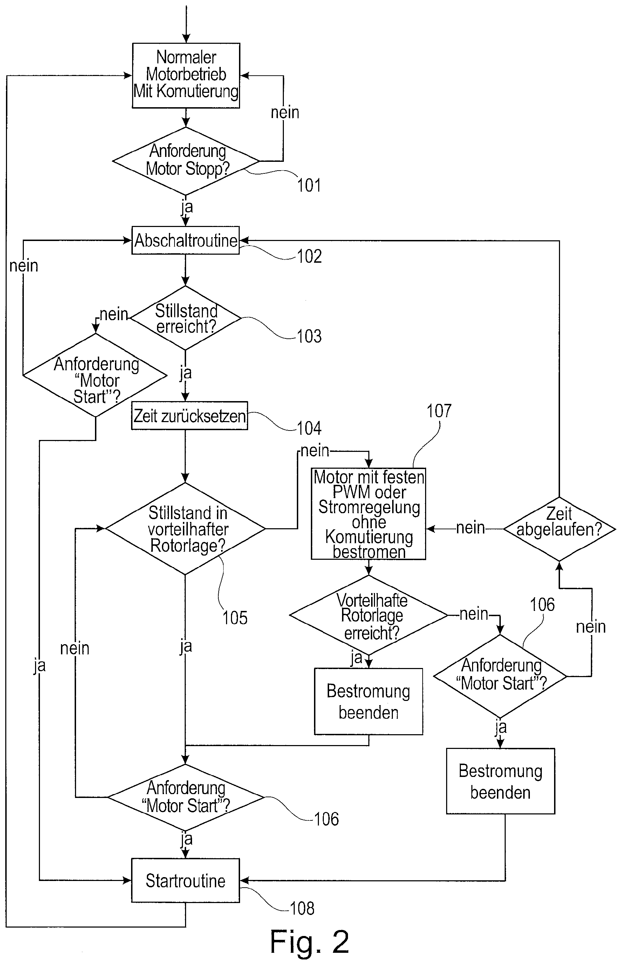

In Figur 2 ist eine Darstellung eines Flussdiagramms einer alternativen Ausführungsform der Erfindung gezeigt. Bei dieser Option ist vorgesehen, dass eine Aufforderung 101 den Motor zu stoppen eine Abschaltroutine 102 startet. Sobald der Stillstand in Position 103 erreicht ist, wird ein Zeitfenster 104 zurückgesetzt und in Position 105 erfasst (vorzugsweise von der Steuerung), ob die Stillstandposition des Rotors 2 eine energetisch günstige Position darstellt. Je nach Ergebnis kann der Motor 1 in Position 106 zu einem späteren Bedarfszeitpunkt wieder starten oder alternativ wird ein Stromimpuls erzeugt, um damit in Position 107 die vorteilhafte Rotorlage des Rotors 2 zu erzielen. Ist diese erreicht, erfolgt keine Bestromung mehr und kann die mit Position 106 bezeichnete "Motorstart" Anforderung zu einem späteren Zeitpunkt erfolgen, wenn der Stillstand-Betrieb wieder verlassen wird.

Wenn aber kein Motorstart erfolgen soll, wir die Schleife (in dem vorgegebenen Zeitfenster) wieder durchlaufen und erfolgt dann solange ein Stromimpuls im Stillstand-Zustand, bis eine Rotorposition mit einem gewünschten Energieminimum erhalten wird.

Nach einer Anforderung den Stillstand-Betrieb in Position 106 wieder zu verlassen und den Motor zu starten, erfolgt eine Startroutine 108.

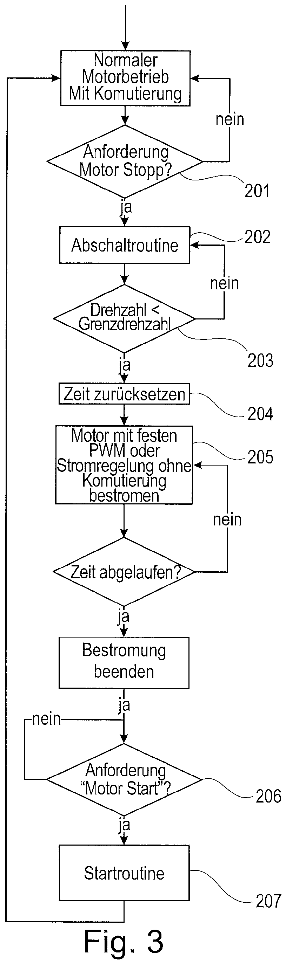

In Figur 3 findet sich eine Darstellung eines Flussdiagramms einer alternativen Ausführungsform der Erfindung. Bei dieser Option ist vorgesehen, dass aus dem Normalbetrieb eine Aufforderung 201 den Motor zu stoppen eine Abschaltroutine 202 auslöst. Sobald eine bestimmte Drehzahl in Position 203 unterschritten wird, wird ein Zeitfenster 204 gesetzt und ein Stromimpuls in Position 205 aktiviert, um den Rotor dadurch in eine energetisch günstige Stillstandposition zu bewegen. Diese erfolgt nicht im kommutierten Zustand sondern in einem Zustand bei dem die Kommutierung nach der Abschaltroutine deaktiviert wurde. Nicht näher dargestellt ist dabei, eine analoge Abfrage, ob die dadurch erreichte Stillstandposition tatsächlich im gewünschten Energieminimum liegt. Sodann erfolgt keine weitere Bestromung mehr und kann die mit Position 206 bezeichnete "Motorstart" Anforderung zu einem späteren Zeitpunkt erfolgen, wenn der Stillstand-Betrieb wieder verlassen werden soll. Mittels einer Startroutine 207 startet der Motor dann wieder.

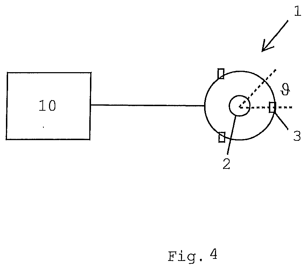

In der Figur 4 ist eine schematische Ansicht eines EC-Motors 1 mit einem Rotor 2 und dessen Winkelposition 9 gezeigt. Es sind 3 Hall-Sensoren zur Positionserfassung der Rotorlage des Rotors 2 vorgesehen. Eine Motorsteuerung 10 ist dazu ausgebildet ist, nach einer Abschaltbedingung des EC-Motors 1 und nach Beenden der Kommutierung des EC-Motors 1 einen in Zeitdauer und Betrag gezielten Stromimpuls an wenigstens einer Motorwicklung zu erzeugen, um dadurch die Stillstandposition des Rotors 2 zu beeinflussen oder zu verändern.

**Patentansprüche**

1. Verfahren zur gezielten Positionsveränderung der Winkelposition 9 eines Rotors (2) eines aktuell nicht kommutierten EC-Motors (1), dessen Winkelposition 9 mit wenigstens einem Positionsbestimmungssensor (3), vorzugsweise wenigstens einem Hall-Sensor ermittelt wird, mittels eines vorbestimmten kurzen Stromimpulses (I) einer Motorsteuerung des EC-Motors (1), **dadurch gekennzeichnet, dass** der Rotor (2) aus dem Stillstand oder nach Unterschreiten einer bestimmten Drehzahl durch den Stromimpuls (I) der Motorsteuerung des EC-Motors (1) in eine solche Winkelposition 9i zwischen 0° und 360° betreffend einer mechanischen Umdrehung gebracht wird, bei welcher der Energieverbrauch E (9) der Motorsteuerung des EC-Motors (1) in dieser Winkelposition $\vartheta_i$ ein lokales Minimum besitzt.

2. Verfahren nach Anspruch 1, **dadurch gekennzeichnet, dass** für den Energieverbrauch E (d) der Motorsteuerung bei der erzielten Winkelposition 9i des Rotors (2) die folgende Bedingung gilt:

$$E\left(\vartheta\right) = E_{min,\,i} \text{ für } \vartheta = \vartheta_i$$

und

$$E\left(\vartheta\right) > E_{min,\,i} \text{ für } \vartheta \neq \vartheta_i$$

wobei 9i diejenigen Winkelpositionen des Rotors (2) darstellen, bei denen der jeweilige Energieverbrauch $E_{min,\,i}$ relative oder absolute Energieminima auf der Energieverlaufskurve E (d) im Drehwinkelbereich von 9 zwischen 0° und 360° darstellen.

3. Verfahren nach Anspruch 1 oder 2, **dadurch gekennzeichnet, dass** der vorbestimmte Stromimpulses (I) zu einem Zeitpunkt erfolgt, nachdem der Rotor (2) nach einem kommutierten Betriebszustand durch Abschalten zunächst in einer zufälligen Stillstandsposition gestoppt hat.

4. Verfahren nach Anspruch 1 oder 2, **dadurch gekennzeichnet, dass** der vorbestimmte Stromimpulses (I) zu einem Zeitpunkt erfolgt, während der Rotor (2) nach einem kommutierten Betriebszustand durch Abschalten eine bestimmte Solldrehzahl unterschritten hat.

5. Verfahren nach einem der vorhergehenden Ansprüche, **dadurch gekennzeichnet, dass** der Rotor durch den Stromimpuls in eine Winkelposition 9i gebracht wird, bei der die folgende Bedingung für die erste Ableitung der Funktion E (d) nach dem Drehwinkel 9 erfüllt ist:

$$dE(\vartheta)/\,d\vartheta = 0 \text{ für } \vartheta = \vartheta_i$$

6. Verfahren nach einem der vorhergehenden Ansprüche, **dadurch gekennzeichnet, dass** die Stromaufnahme in einer Winkelposition $\vartheta_i$ geringer ist als in einer davon abweichenden Position bei der der Energieverbrauch lagebedingt höher ist.

7. Verfahren nach einem der vorhergehenden Ansprüche, **dadurch gekennzeichnet, dass** eine Steuerungseinheit vorgesehen ist, welche aus erfassten Sensordaten des oder der Hall-Sensoren, vorzugsweise aus den sich zeitlich ändernden Sensordaten des oder der Hall-Sensoren mindestens einen Wert und eine Zeitdauer für einen Stromimpuls I ermittelt, der erforderlich ist, um eine ganz bestimmte Drehwinkellage 9i des Rotors (2) zu erzielen.

8. Verfahren nach einem der vorhergehenden Ansprüche, **dadurch gekennzeichnet, dass** eine Steuerungseinheit das Erreichen einer bestimmten Energieverbrauchsposition aus dem jeweils aktuellen Energieverbrauch über eine Messung der Stromaufnahme der Motorsteuerung ermittelt.

9. Verfahren nach einem der vorhergehenden Ansprüche, **dadurch gekennzeichnet, dass** die Bestromung des Motors durch gezieltes Einprägen eines vergleichsweise kleinen Stromimpulses für eine kurze Zeitdauer in die Motorwicklung ohne Kommutierung des Motors dann wiederholt erfolgt, wenn der Rotor (2) durch äußere Einflüsse nach Erreichen einer energetisch günstigen Winkelposition $\vartheta_i$ wieder aus der optimierten Lage in eine Winkelpositionen 3

$\neq \vartheta_i$ wegbewegt wurde.

**Claims**

1. A method for targetedly changing the angular position 9 of a rotor (2) of a currently non-commutated EG motor (1) whose angular position 9 is determined with at least one position determination sensor (3), preferably at least one Hall sensor, by means of a predetermined short current pulse (1) of a motor control unit of the EG motor (1), **characterized in that** the rotor (2), from standstill or after falling below a certain speed, is brought by the current pulse (1) of the motor control unit of the EG motor (1) into an angular position $\vartheta_i$ between 0° and 360° relative to a mechanical rotation which is such that the energy consumption E (9) of the motor control unit of the EG motor (1) has a local minimum in this angular position $\vartheta_i$.

2. The method as set forth in claim 1, **characterized in that** the following condition applies to the energy consumption E (9) of the motor control unit at the achieved angular position 9 of the rotor (2):

$$E\,(\vartheta) = E_{min,\,i} \text{ for } \vartheta = \vartheta_i$$

and

$$E\,(\vartheta) > E_{min,\,i} \text{ for } \vartheta \neq \vartheta_i$$

where 9 represents those angular positions of the rotor (2) in which the respective energy consumption $E_{min,\,i}$ represents relative or absolute energy minima on the energy curve E (9) in the rotation angle range of 9 between 0° and 360°.

3. The method as set forth in claim 1 or 2, **characterized in that** the predetermined current pulse (1) occurs at a point in time after the rotor (2) has first stopped in a random standstill position after a commutated operating state due to shutdown.

4. The method as set forth in claim 1 or 2, **characterized in that** the predetermined current pulse (1) occurs at a point in time during which the rotor (2) has fallen below a specific setpoint speed after a commutated operating state due to shutdown.

5. The method as set forth in any one of the preceding claims, **characterized in that** the rotor is brought by the current pulse into an angular position 9 in which the following condition is fulfilled for the first derivative of the function E (9) according to the rotation angle 9:

$$dE(\vartheta)/\,d\vartheta = 0 \text{ for } \vartheta = \vartheta_i$$

6. The method as set forth in any one of the preceding claims, **characterized in that** the power consumption in an angular position $\vartheta$ is lower than in a different position in which the energy consumption is higher due to the position.

7. The method as set forth in any one of the preceding claims, **characterized in that** a control unit is provided which, from detected sensor data from the Hall sensor or sensors, preferably from the sensor data from the Hall sensor or sensors that change over time, determines at least one value and one time duration for a current pulse I that is required in order to achieve a very specific angular position $\vartheta$ of the rotor (2).

8. The method as set forth in any one of the preceding claims, **characterized in that** a control unit determines when a specific energy consumption position has been reached from the respective present energy consumption by measuring the power draw of the motor control unit.

9. The method as set forth in any one of the preceding claims, **characterized in that** if, after an energetically favorable angular position $\vartheta$ had been achieved, the rotor (2) has again been moved by external influences out of the optimized position into an angular position $\vartheta \neq \vartheta_i$, the motor is repeatedly energized through the targeted injection of a comparatively small current pulse for a short time duration into the motor winding without commutating the motor.

**Revendications**

1. Procédé de changement de position obtenue de la position angulaire $\vartheta$ d'un rotor (2) d'un moteur CE (1) actuellement non commuté, dont la position angulaire $\vartheta$ est déterminée avec au moins un capteur de détermination de position (3), de préférence au moins un capteur à effet Hall, au moyen d'une courte impulsion de courant (I) prédéterminée d'une commande de moteur du moteur CE (1), **caractérisé en ce que** le rotor (2), à partir de l'arrêt ou après le passage en dessous d'une vitesse de rotation déterminée, est amené par l'impulsion de courant (I) de la commande du moteur CE (1) dans une telle position angulaire

$$\vartheta_i$$

entre 0° et 360° concernant une rotation mécanique, pour laquelle la consommation d'énergie E ($\vartheta$) de la commande du moteur CE (1) possède un minimum local dans cette position angulaire

$$\vartheta_i.$$

2. Procédé selon la revendication 1, **caractérisé en ce que** la condition suivante s'applique à la consommation d'énergie E ($\vartheta$) de la commande du moteur à la position angulaire

$$\vartheta_i$$

obtenue du rotor (2) :

$$E(\vartheta) = E_{min,\,i} \text{ pour } \vartheta = \vartheta_i$$

et

$$E(\vartheta) > E_{min,\,i} \text{ pour } \vartheta \neq \vartheta_i$$

où

$$\vartheta_i$$

représente les positions angulaires du rotor (2) dans lesquelles la consommation d'énergie respective $E_{min,\,i}$ représente des minima d'énergie relatifs ou absolus sur la courbe d'énergie E ($\vartheta$) dans la plage d'angle de rotation de $\vartheta$ entre 0° et 360°.

3. Procédé selon la revendication 1 ou 2, **caractérisé en ce que** l'impulsion de courant (I) prédéterminée a lieu à un moment après que le rotor (2) s'est initialement arrêté dans une position d'arrêt aléatoire après un état de fonctionnement commuté par mise hors tension.

4. Procédé selon la revendication 1 ou 2, **caractérisé en ce que** l'impulsion de courant (I) prédéterminée a lieu à un moment où le rotor (2) est tombé en dessous d'une certaine vitesse de consigne après un état de fonctionnement commuté par mise hors tension.

5. Procédé selon l'une des revendications précédentes, **caractérisé en ce que** le rotor est amené par l'impulsion de courant dans une position angulaire

$$\vartheta_i$$

dans laquelle la condition suivante pour la première dérivation de la fonction E ($\vartheta$) en fonction de l'angle de rotation $\vartheta$ est remplie :

$$dE(\vartheta)/d\vartheta = 0 \text{ pour } \vartheta = \vartheta_i$$

6. Procédé selon l'une des revendications précédentes, **caractérisé en ce que** la consommation d'énergie dans une position angulaire

$$\vartheta_i$$

est plus faible que dans une position différente dans laquelle la consommation d'énergie est plus élevée en raison de la position.

7. Procédé selon l'une des revendications précédentes, **caractérisé en ce qu'**une unité de commande est prévue qui détermine au moins une valeur et une durée pour une impulsion de courant I à partir des données de capteur détectées du ou des capteurs à effet Hall, de préférence à partir des données de capteur du ou des capteurs à effet Hall qui changent dans le temps, l'impulsion de courant étant nécessaire pour atteindre une position angulaire de rotation

$$\vartheta_i$$

bien spécifique du rotor (2).

8. Procédé selon l'une des revendications précédentes, **caractérisé en ce qu'**une unité de commande détermine le moment où une position de consommation d'énergie spécifique a été atteinte à partir de la consommation d'énergie actuelle en mesurant la consommation d'énergie de la commande de moteur.

9. Procédé selon l'une des revendications précédentes, **caractérisé en ce que** le moteur est alimenté en courant par injection ciblée d'une impulsion de courant relativement faible pendant une courte durée dans l'enroulement du moteur sans commutation du moteur lorsque le rotor (2) a été déplacé par des influences extérieures, après avoir atteint une position angulaire

$$\vartheta_i$$

énergétiquement favorable, à nouveau de la position optimisée vers une position angulaire

$$\vartheta \neq \vartheta_i.$$

Stopp-Anforderung
bzw. stehender Motor?

Nein

Ja

Ja

Optimale Rotorlage
erreicht?

Nein

Rotor in optimale
Rotorlage verbringen

Fig. 1

Fig. 2

Normaler
Motorbetrieb
Mit Komutierung

Anforderung
Motor Stopp? — 201

nein

ja

Abschaltroutine — 202

Drehzahl <
Grenzdrehzahl — 203

nein

ja

Zeit zurücksetzen — 204

Motor mit festen
PWM oder
Stromregelung ohne — 205
Komutierung
bestromen

Zeit abgelaufen?

nein

ja

Bestromung
beenden

ja

nein

Anforderung
"Motor Start"? — 206

ja

Startroutine

— 207

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015200459 A1
- JP H07322683 A